# EUROPEAN PATENT APPLICATION

(11) **EP 0 933 396 A2**
(43) Date of publication of application: **04.08.1999**
(21) Application number: 99300222.9
(22) Date of filing: 14.01.1999
(51) Int. Cl.: C08L 69/00

(54) **Flame retardant polycarbonate resin/abs graft copolymer blends**

(30) Priority: 28.01.1998 US 14782
(71) Applicant: GENERAL ELECTRIC COMPANY, Schenectady, NY 12345 (US)
(72) Inventor: Chen, Fuh-Sheng Fred, Parkersburg, West Virginia 26101 (US); Van Bennekom, Antoinette Cornelia Maria, Bergen op Zoom (NL); Govaerts, Luc Carlos, 2320 Hoogstraten (BE); Miyake, Hiroshi, Haga-gun, Tochigi Prefecture (JP)
(74) Representative: Szary, Anne Catherine, Dr.

(57) **Abstract**

A thermoplastic resin composition contains a polycarbonate resin, a mass polymerized rubber modified graft copolymer that contains a discontinuous rubber phase dispersed in a continuous rigid thermoplastic phase, wherein at least a portion of the rigid thermoplastic phase is chemically grafted to the rubber phase, and an organophosphorus flame retardant and exhibits improved properties.

## Description

The invention relates to flame retardant polycarbonate resin/ ABS graft copolymer blends that exhibit improved performance.

Flame retardant thermoplastic resin compositions that contain an aromatic polycarbonate resin, an ABS graft copolymer, a fluoropolymer and an organophosphate flame retardant are known and have been found to exhibit good flame retardency and good heat resistance, see, for example, coassigned U.S. Patent Number 5,204,394.

Flame retardant resin compositions that exhibit improved physical properties and hydrolytic stability are desired.

The thermoplastic resin composition of the present invention comprises:
(a) an aromatic polycarbonate resin,
(b) a rubber modified graft copolymer comprising a discontinuous rubber phase dispersed in a continuous rigid thermoplastic phase, wherein at least a portion of the rigid thermoplastic phase is chemically grafted to the rubber phase, said rubber modified graft copolymer being made by a bulk polymerization process, and
(c) a flame retarding amount of an organophosphate flame retardant.

The composition of the present invention provides good processability, good physical properties, including resistance to elevated temperature and impact resistance, and provides improved hydrolytic stability and improved resistance to thermal degradation. As used herein, the terminology "hydrolytic stability" means a tendency not to undergo changes in chemical composition and/or molecular weight when exposed to conditions of elevated temperature and humidity. For example, the chemical composition and molecular weight of the thermoplastic resin components of a thermoplastic resin composition having ideal hydrolytic stability would remain unchanged under conditions of elevated temperature and high humidity, while the chemical composition and/or molecular weight of the thermoplastic resin components of a thermoplastic resin composition having poor hydrolytic stability would change markedly as a result of exposure to such conditions.

### DETAILED DESCRIPTION OF THE INVENTION

In a preferred embodiment, the thermoplastic resin composition of the present invention is comprises, based on 100 parts by weight ("pbw") of thermoplastic resin composition, from 40 to 95 pbw, more preferably from 50 to 90 pbw, even more preferably from 55 to 80 pbw, of the aromatic polycarbonate resin, from 4 to 59 pbw, more preferably from 8 to 48 pbw, even more preferably from 14 to 39 pbw, of the rubber modified graft copolymer and from 1 to 20 pbw, more preferably from 2 to 15 pbw, even more preferably from 6 to 12 pbw, of the organophosphate flame retardant.

Aromatic polycarbonate resins suitable for use as the polycarbonate resin component of the thermoplastic resin composition of the present invention are known compounds whose preparation and properties have been described, see, generally, U.S. Patent Nos. 3,169,121, 4,487,896 and 5,411,999, the respective disclosures of which are each incorporated herein by reference.

In a preferred embodiment, the aromatic polycarbonate resin component of the present invention is the reaction product of a dihydric phenol according to the structural formula (I):

HO-A-OH (I)

wherein A is a divalent aromatic radical,
with a carbonate precursor and contains structural units according to the formula (II): 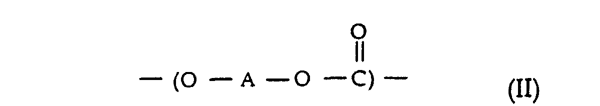 wherein A is defined as above.

As used herein, the term "divalent aromatic radical "includes those divalent radicals containing a single aromatic ring such as phenylene, those divalent radicals containing a condensed aromatic ring system such as, for example, naphthlene, those divalent radicals containing two or more aromatic rings joined by a non-aromatic linkage, such as for example, an alkylene, alkylidene or sulfonyl group, any of which may be substituted at one or more sites on the aromatic ring with, for example, a halo group or (C₁-C₆)alkyl group.

In a preferred embodiment, A is a divalent aromatic radical according to the formula (XXI): 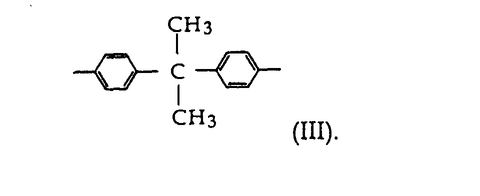 Suitable dihydric phenols include, for example, one or more of 2, 2-bis-(4-hydroxyphenyl) propane ("bisphenol A"), 2,2-bis(3,5-dimethyl-4-hydroxyphenyl)propane, bis(4-hydroxyphenyl) methane, 4,4-bis(4-hydroxyphenyl)heptane, 3,5,3',5'-tetrachloro-4,4'-dihydroxyphenyl)propane, 2,6-dihydroxy naphthalene, hydroquinone, 2,4'-dihydroxyphenyl sulfone. In a highly preferred embodiment, the dihydric phenol is bisphenol A.

The carbonate precursor is one or more of a carbonyl halide, a carbonate ester or a haloformate. Suitable carbonyl halides include, for example, carbonyl bromide and carbonyl chloride. Suitable carbonate esters include, such as for example, diphenyl carbonate, dichlorophenyl carbonate, dinaphthyl carbonate, phenyl tolyl carbonate and ditolyl carbonate. Suitable haloformates include, for example, bishaloformates of dihydric phenols, such as, for example, hydroquinone, or glycols, such as, for example, ethylene glycol, neopentyl glycol. In a highly preferred embodiment, the carbonate precursor is carbonyl chloride.

Suitable aromatic polycarbonate resins include linear aromatic polycarbonate resins, branched aromatic polycarbonate resins. Suitable linear aromatic polycarbonates resins include, e.g., bisphenol A polycarbonate resin. Suitable branched polycarbonates are known and are made by reacting a polyfunctional aromatic compound with a dihydric phenol and a carbonate precursor to form a branched polymer, see generally, U. S. Patent Nos. 3,544,514, 3,635,895 and 4,001,184, the respective disclosures of which are incorporated herein by reference. The polyfunctional compounds are generally aromatic and contain at least three functional groups which are carboxyl, carboxylic anhydrides, phenols, haloformates or mixtures thereof, such as, for example, 1,1,1-tri(4-hydroxyphenyl)ethane, 1,3,5,-trihydroxybenzene, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenone-tetracarboxylic dianhydride. The preferred polyfunctional aromatic compounds are 1,1,1-tri(4-hydroxyphenyl)ethane, trimellitic anhydride or trimellitic acid or their haloformate derivatives.

In a preferred embodiment, the polycarbonate resin component of the present invention is a linear polycarbonate resin derived from bisphenol A and phosgene.

In a preferred embodiment, the weight average molecular weight of the polycarbonate resin is from about 10,000 to about 200,000 grams per mole ("g/mol"), as determined by gel permeation chromatography relative to polystyrene. Such resins typically exhibit an intrinsic viscosity of about 0.3 to about 1.5 deciliters per gram in methylene chloride at 25°C.

Polycarbonate resins are made by known methods, such as, for example, interfacial polymerization, transesterification, solution polymerization or melt polymerization.

Copolyester-carbonate resins are also suitable for use as the aromatic polycarbonate resin component of the present invention. Copolyestercarbonate resins suitable for use as the aromatic polycarbonate resin component of the thermoplastic resin composition of the present invention are known compounds whose preparation and properties have been described, see, generally, U.S. Patent Nos. 3,169,121, 4,430,484 and 4,487,896, the respective disclosures of which are each incorporated herein by reference.

Copolyestercarbonate resins comprise linear or randomly branched polymers that contain recurring carbonate groups, carboxylate groups and aromatic carbocyclic groups in the polymer chain, in which at least some of the carbonate groups are bonded directly to the ring carbon atoms of the aromatic carbocyclic groups.

In a preferred embodiment, the copolyestercarbonate resin component of the present invention is derived from a carbonate precursor, at least one dihydric phenol and at least one dicarboxylic acid or dicarboxylic acid equivalent. In a preferred embodiment, the dicarboxylic acid is one according to the formula (IV): 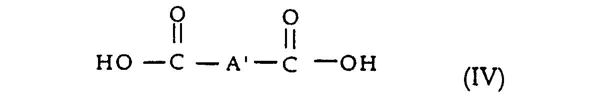 wherein A' is alkylene, alkylidene, cycloaliphatic or aromatic and is preferably a non-substituted phenylene radical or a substituted phenylene radical that is substituted at one or more sites on the aromatic ring, wherein each of such substituent groups is independently (C₁-C₆) alkyl, and the copolyester carbonate resin comprises first structural units according to formula (II) above and second structural units according to formula (V): 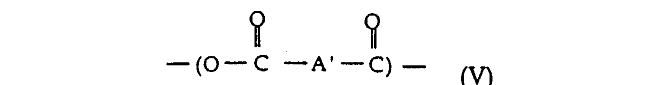 wherein A' is defined as above.

Suitable carbonate precursors and dihydric phenols are those disclosed above.

Suitable dicarboxylic acids, include, for example, phthalic acid,
isophthalic acid, terephthalic acid, dimethyl terephthalic acid, oxalic acid, malonic acid, succinic acid, glutaric acid, adipic acid, pimelic acid, suberic acid, azelaic acid, sebacic acid, dimethyl malonic acid, 1,12-dodecanoic acid, *cis*-1,4-cyclohexane dicarboxylic acid, *trans*-1,4-cyclohexane dicarboxylic acid, 4,4'- bisbenzoic acid, naphthalene-2,6-dicarboxylic acid. Suitable dicarboxylic acid equivalents include, for example, anhydride, ester or halide derivatives of the above disclosed dicarboxylic acids, such as, for example, phthalic anhydride, dimethyl terephthalate, succinyl chloride.

In a preferred embodiment, the dicarboxylic acid is an aromatic dicarboxylic acid, more preferably one or more of terephthalic acid and isophthalic acid.

In a preferred embodiment, the ratio of ester bonds to carbonate bonds present in the copolyester carbonate resin is from 0.25 to 0.9 ester bonds per carbonate bond.

In a preferred embodiment, the copolyestercarbonate copolymer has a weight average molecular weight of from about 10,000 to about 200,000 g/mol.

Copolyestercarbonate resins are made by known methods, such as, for example, interfacial polymerization, transesterification, solution polymerization or melt polymerization.

Rubber modified thermoplastic resins suitable for use as the rubber modified thermoplastic resin of the present invention are those rubber modified thermoplastic resins that are made by a bulk or, synonymously, mass, polymerization process and that comprise a discontinuous rubber phase dispersed in a continuous rigid thermoplastic phase, wherein at least a portion of the rigid thermoplastic phase is chemically grafted to the rubber phase.

Bulk polymerization processes for making rubber modified graft copolymers are well known in the art, see, for example, U.S. Patent Nos. 2,646,418; 3,243,481; 4,254,236 and 5,414,045, the disclosures of which are each hereby incorporated by reference herein.

In a preferred embodiment, the rubber modified thermoplastic resin is made by a bulk polymerization process that is carried out in a series of polymerization reactors consecutively connected to each other to provide a series of reaction zones. A rubber, for example, a styrene-butadiene rubber, is dissolved in one or more of the monomers from which the rigid thermoplastic phase of the graft copolymer is to be derived, for example, styrene monomer or styrene and acrylonitrile monomers, to form a reaction mixture that is fed to the reactor system and the reaction mixture is subjected to polymerization conditions. Polymerization of the monomers of the reaction mixture may be chemically or thermally initiated. The viscosity of the reaction mixture increases during the course of the polymerization reaction and a rigid thermoplastic phase, for example, a styrene-acrylonitrile ("SAN") copolymer, is formed, a portion of which is chemically grafted to the rubber and a portion of which is not grafted to the rubber. At some point in the reaction, the reaction mixture separates to form two phases, that is, a continuous rubber solution phase and a discontinuous non-grafted rigid thermoplastic phase dispersed in the rubber solution phase. As the polymerization reaction progresses, the rubber solution phase begins to disperse in the growing rigid thermoplastic phase and, eventually, a "phase inversion" occurs wherein non-grafted rigid thermoplastic phase becomes the continuous phase and the rubber solution phase becomes a discontinuous phase dispersed in the non-grafted rigid thermoplastic phase. Typically, a third phase is also present, in that during the phase inversion some non-grafted rigid thermoplastic phase becomes occluded within the discontinuous rubber solution phase. Following the phase inversion, the polymerization reaction is continued and more non-grafted rigid thermoplastic phase is formed. The reaction mixture is then subjected to more aggressive reaction conditions to drive the reaction to a desired level, typically in the range of 60 to 90%, of monomer conversion. The reaction produces a rubber phase and a rigid thermoplastic phase, at least a portion of which is grafted to the rubber phase. The product is then devolatilized to remove any residual unreacted monomers and solvent.

Suitable rubbers for use in making the rubber phase are polymers those having a glass transition temperature (T_{g}) of less than or equal to 25°C, more preferably less than or equal to 0 °C, and even more preferably less than or equal to -30°C. As referred to herein, the T_{g} of a polymer is the T_{g} value of polymer as measured by differential scanning calorimetry (heating rate 20° C/minute, with the T_{g} value being determined at the inflection point).

In a preferred embodiment, the rubber comprises a linear polymer having structural units derived from one or more conjugated diene monomers.

Suitable conjugated diene monomers include, e.g., 1,3-butadiene, isoprene, 1,3-heptadiene, methyl-1,3-pentadiene, 2,3-dimethylbutadiene, 2-ethyl-1,3-pentadiene, 1,3-hexadiene, 2,4, hexadiene, dichlorobutadiene, bromobutadiene and dibromobutadiene as well as mixtures of conjugated diene monomers. In a preferred embodiment, the conjugated diene monomer is 1,3-butadiene.

The rubber may, optionally, include structural units derived from one or more copolymerizable monoethylenically unsaturated monomers selected from (C₂-C₈)olefin monomers, vinyl aromatic monomers and monoethylenically unsaturated nitrile monomers and (C₁-C₁₂)alkyl (meth)acrylate monomers.

As used herein, the term "(C₂-C₈)olefin monomers" means a compound having from 2 to 8 carbon atoms per molecule and having a single site of ethylenic unsaturation per molecule. Suitable (C₂-C₈)olefin monomers include, e.g., ethylene, propene, 1-butene, 1-pentene, heptene.

Suitable vinyl aromatic monomers include, e.g., styrene and substituted styrenes having one or more alkyl, alkoxyl, hydroxyl or halo substituent group attached to the aromatic ring, including, e.g., α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers.

As used herein, the term "monoethylenically unsaturated nitrile monomer" means an acyclic compound that includes a single nitrile group and a single site of ethylenic unsaturation per molecule and includes, e.g., acrylonitrile, methacrylonitrile, α-chloro acrylonitrile.

As used herein, the term "(C₁-C₁₂)alkyl" means a straight or branched alkyl substituent group having from 1 to 12 carbon atoms per group and includes, e.g., methyl, ethyl, n-butyl, sec-butyl, t-butyl, n-propyl, iso-propyl, pentyl, hexyl, heptyl, octyl, nonyl, decyl, undecyl and dodecyl, and the terminology "(meth)acrylate monomers" refers collectively to acrylate monomers and methacrylate monomers. Suitable (C₁-C₁₂)alkyl (meth)acrylate monomers include (C₁-C₁₂)alkyl acrylate monomers, e.g., ethyl acrylate, butyl acrylate, iso-pentyl acrylate, n-hexyl acrylate, 2-ethyl hexyl acrylate, and their (C₁-C₁₂)alkyl methacrylate analogs such as, e.g., methyl methacrylate, ethyl methacrylate, propyl methacrylate, iso-propyl methacrylate, butyl methacrylate, hexyl methacrylate, decyl methacrylate.

In a first preferred embodiment, the rubber is a polybutadiene homopolymer.

In an alternative preferred embodiment, the rubber is a copolymer, preferably a block copolymer, comprising structural units derived from one or more conjugated diene monomers and up to 50 percent by weight ("wt%") structural units derived from one or more monomers selected from vinyl aromatic monomers and monoethylenically unsaturated nitrile monomers, such as, for example, a styrene-butadiene copolymer, an acrylonitrile-butadiene copolymer or a styrene-butadiene-acrylonitrile copolymer.

In a highly preferred embodiment, the rubber is a styrene-butadiene block copolymer that contains from 50 to 95 wt% structural units derived from butadiene and from 5 to 50 wt% structural units derived from styrene.

The rigid thermoplastic resin phase comprises one or more thermoplastic polymers and exhibits a T_{g} of greater than 25°C, preferably greater than or equal to 90°C and even more preferably greater than or equal to 100°C.

In a preferred embodiment, the rigid thermoplastic phase comprises one or more polymers each having structural units derived from one or more monomers selected from the group consisting of (C₁-C₁₂)alkyl (meth)acrylate monomers, vinyl aromatic monomers and monoethylenically unsaturated nitrile monomers.

Suitable vinyl aromatic monomers and monoethylenically unsaturated nitrile monomers and of (C₁-C₁₂)alkyl (meth)acrylate monomers are those set forth above in the description of the rubber phase.

In a preferred embodiment, the rigid thermoplastic resin phase comprises a vinyl aromatic polymer having first structural units derived from one or more vinyl aromatic monomers, preferably styrene, and having second structural units derived from one or more monoethylenically unsaturated nitrile monomers, preferably acrylonitrile. More preferably, the rigid phase comprises from 55 to 99 wt%, still more preferably 60 to 90 wt%, structural units derived from styrene and from 1 to 45 wt%, still more preferably 10 to 40 wt%, structural units derived from acrylonitrile.

The amount of grafting that takes place between the rigid thermoplastic phase and the rubber phase varies with the relative amount and composition of the rubber phase. In a preferred embodiment, from 10 to 90 wt%, preferably from 25 to 60 wt%, of the rigid thermoplastic phase is chemically grafted to the rubber phase and from 10 to 90 wt%, preferably from 40 to 75 wt% of the rigid thermoplastic phase remains "free, i.e., non-grafted.

The rigid thermoplastic phase of the rubber modified thermoplastic resin may be formed: (i) solely by polymerization carried out in the presence of the rubber phase or (ii) by addition of one or more separately polymerized rigid thermoplastic polymers to a rigid thermoplastic polymer that has been polymerized in the presence of the rubber phase.

In a preferred embodiment, the rubber modified thermoplastic resin comprises an rubber phase comprising a polymer having structural units derived from one or more conjugated diene monomers, and, optionally, further comprising structural units derived from one or more monomers selected from vinyl aromatic monomers and monoethylenically unsaturated nitrile monomers, and the rigid thermoplastic phase comprises a polymer having structural units derived from one or more monomers selected from vinyl aromatic monomers and monoethylenically unsaturated nitrile monomers.

In a highly preferred embodiment, the rubber phase of the rubber modified graft copolymer comprises a polybutadiene or poly(styrenebutadiene) rubber and the rigid phase comprises a styrene-acrylonitrile copolymer.

Each of the polymers of the rubber phase and of the rigid thermoplastic resin phase of the rubber modified thermoplastic resin may, provided that the T_{g} limitation for the respective phase is satisfied, optionally include structural units derived from one or more other copolymerizable monoethylenically unsaturated monomers such as, e.g., monoethylenically unsaturated carboxylic acids such as, e.g., acrylic acid, methacrylic acid, itaconic acid, hydroxy(C₁-C₁₂)alkyl (meth)acrylate monomers such as, e.g., hydroxyethyl methacrylate; (C₄-C₁₂)cycloalkyl (meth)acrylate monomers such as e.g., cyclohexyl methacrylate; (meth)acrylamide monomers such as e.g.,
acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "(C₄-C₁₂)cycloalkyl" means a cyclic alkyl substituent group having from 4 to 12 carbon atoms per group and the term "(meth)acrylamide" refers collectively to acrylamides and methacrylamides.

In a preferred embodiment, the rubber phase of rubber modified thermoplastic resin has a particle size of from 0.1 to 3.0 micrometers ("µm") more preferably from 0.2 to 2.0 µm.

In a preferred embodiment, the composition of the present invention includes a fluoropolymer, in an amount, typically from 0.01 to 0.5 pbw fluoropolymer per 100 pbw of the thermoplastic resin composition, that is effective to provide anti-drip properties to the resin composition. Suitable fluoropolymers and methods for making such fluoropolymers are known, see, e.g., U.S Patent Nos. 3,671,487, 3,723,373 and 3,383,092. Suitable fluoropolymers include homopolymers and copolymers that comprise structural units derived from one or more fluorinated α-olefin monomers. The term "fluorinated α-olefin monomer" means an α-olefin monomer that includes at least one fluorine atom substituent. Suitable fluorinated α-olefin monomers include, e.g., fluoroethylenes such as, e.g., CF₂=CF_{2,} CHF=CF₂, CH₂=CF₂, CH₂=CHF, CCIF=CF_{2,} CCl₂=CF_{2,} CClF=CClF, CHF=CCl_{2,}
CH₂=CCIF, and CCl₂=CCIF and fluoropropylenes such as, e.g., CF₃CF=CF₂, CF₃CF=CHF, CF₃CH=CF_{2,} CF₃CH=CH_{2,} CF₃CF=CHF, CHF₂CH=CHF and CF₃CH=CH₂. In a preferred embodiment, the fluorinated α-olefin monomer is one or more of tetrafluoroethylene (CF₂=CF₂), chlorotrichloroethylene (CCIF=CF₂), vinylidene fluoride (CH₂=CF₂) and hexafluoropropylene (CF₂=CFCF₃).

Suitable fluorinated α-olefin homopolymers include e.g., poly(tetrafluoroethylene), poly(hexafluoroethylene).

Suitable fluorinated α-olefin copolymers include copolymers comprising structural units derived from two or more fluorinated α-olefin copolymers such as , e.g., poly(tetrafluoroethylene-hexafluoroethylene), and copolymers comprising structural units derived from one or more fluorinated monomers and one or more non-fluorinated monoethylenically unsaturated monomers that are copolymerizable with the fluorinated monomers such as, e.g., poly(tetrafluoroethylene-ethylene-propylene) copolymers. Suitable non-fluorinated monoethylenically unsaturated monomers include e.g., α-olefin monomers such as, e.g., ethylene, propylene butene, acrylate monomers such as e.g., methyl methacrylate, butyl acrylate, vinyl ethers, such as, e.g., cyclohexyl vinyl ether, ethyl vinyl ether, n-butyl vinyl ether, vinyl esters such as, e.g., vinyl acetate, vinyl versatate.

In a preferred embodiment, the fluoropolymer particles range in size from 50 to 500 nm, as measured by electron microscopy.

In a highly preferred embodiment, the fluoropolymer is a poly(tetrafluoroethylene) homopolymer ("PTFE").

Since direct incorporation of a fluoropolymer into a thermoplastic resin composition tends to be difficult, it is preferred that the fluoropolymer be preblended in some manner with a second polymer, such as for, example, an aromatic polycarbonate resin or a styrene-acrylonitrile resin. For example, an aqueous dispersion of fluoropolymer and a polycarbonate resin may be steam precipitated to form a fluoropolymer concentrate for use as a drip inhibitor additive in thermoplastic resin composition, as disclosed in,for example, U.S. Patent No. 5,521,230, or, alternatively, an aqueous styrene-acrylonitrile resin emulsion or an aqueous acrylonitrile-butadiene-styrene resin emulsion and then precipitating and drying the co-coagulated fluoropolymer -thermoplastic resin composition to provide a PTFE-thermoplastic resin powder as disclosed in, for example, U.S Patent No. 4,579,906.

In a preferred embodiment, the fluoropolymer additive comprises from 30 to 70 wt%, more preferably 40 to 60 wt%, of the fluoropolymer and from 30 to 70 wt%, more preferably 40 to 60 wt%, of the second polymer.

In a preferred embodiment, a fluoropolymer additive is made by emulsion polymerization of one or more monoethylenically unsaturated monomers in the presence of the aqueous fluoropolymer dispersion of the present invention to form a second polymer in the presence of the fluoropolymer. Suitable monoethylenically unsaturated monomers are disclosed above. The emulsion is then precipitated, e.g., by addition of sulfuric acid. The precipitate is dewatered, e.g., by centrifugation, and then dried to form a fluoropolymer additive that comprises fluoropolymer and an associated second polymer. The dry emulsion polymerized fluoropolymer additive is in the form of a free-flowing powder.

In a preferred embodiment, the monoethylenically unsaturated monomers that are emulsion polymerized to form the second polymer comprise one or more monomers selected from vinyl aromatic monomers, monoethylenically unsaturated nitrile monomer and (C₁-C₁₂)alkyl (meth)acrylate monomers. Suitable vinyl aromatic monomers,
monoethylenically unsaturated nitrile monomer and (C₁-C₁₂)alkyl (meth)acrylate monomers are disclosed above.

In a highly preferred embodiment, the second polymer comprises structural units derived from styrene and acrylonitrile. More preferably, the second polymer comprises from 60 to 90 wt% structural units derived from styrene and from 10 to 40 wt% structural units derived from acrylonitrile.

The emulsion polymerization reaction mixture may optionally include emulsified or dispersed particles of a third polymer, such as, e.g., an emulsified butadiene rubber latex.

The emulsion polymerization reaction is initiated using a conventional free radical initiator such as, e.g., an organic peroxide compound, such as e.g., benzoyl peroxide, a persulfate compound, such as, e.g., potassium persulfate, an azonitrile compound such as, e.g., 2,2'-azobis-2,3,3-trimethylbutyronitrile, or a redox initiator system, such as, e.g., a combination of cumene hydroperoxide, ferrous sulfate, tetrasodium pyrophosphate and a reducing sugar or sodium formaldehyde sulfoxylate.

A chain transfer agent such as, e.g., a (C₉-C₁₃) alkyl mercaptan compound such as nonyl mercaptan, t-dodecyl mercaptan, may, optionally, be added to the reaction vessel during the polymerization reaction to reduce the molecular weight of the second polymer. In a preferred embodiment, no chain transfer agent is used.

In a preferred embodiment, the stabilized fluoropolymer dispersion is charged to a reaction vessel and heated with stirring. The initiator system and the one or more monoethylenically unsaturated monomers are then charged to the reaction vessel and heated to polymerize the monomers in the presence of the fluoropolymer particles of the dispersion to thereby form the second polymer.

Suitable fluoropolymer additives and emulsion polymerization methods are disclosed in EP 0 739 914 A1.

In a preferred embodiment, the second polymer exhibits a weight average molecular weight of from about 10,000 to about 200,000 g/ mol.

Organophosphorus compounds suitable as the organophosphorus flame retardant of the present invention are known compounds including monophosphate esters such as, for example, triphenyl phosphate, tricresyl phosphate, tritolyl phosphate, diphenyl tricresylphosphate, phenyl bisdodecyl phosphate, ethyl diphenyl phosphate, as well as diphosphate esters and oligomeric phosphates such as, for example, resorcinol diphosphate, diphenyl hydrogen phosphate, 2-ethylhexyl hydrogen phosphate. Suitable oligomeric phosphate compounds are set forth in coassigned U.S. Patent Number 5,672,645, to Johannes C. Gossens et al for a "Polymer Mixture Having Aromatic Polycarbonate, Styrene Containing Copolymer and/or Graft Copolymer and a Flame Retardant, Articles Formed Therefrom", the disclosure of which is hereby incorporated herein by reference.

In a preferred embodiment, the organophosphorus flame retardant of the present invention comprises one or more compounds according to the structural formula (VI): 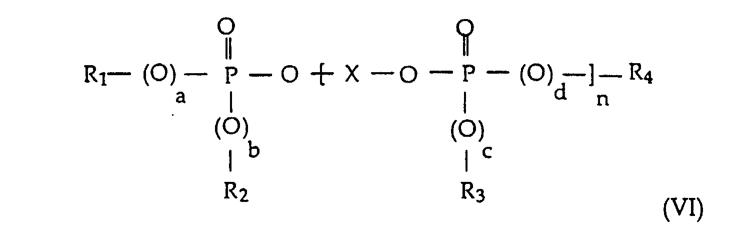
wherein R₁, R_{2,} R₃ and R₄ are each independently aryl, which may be optionally substituted with halo or alkyl,
X is arylene, optionally substituted with halo or alkyl,
a, b, c and d are each independently 0 or 1, and
n is an integer of from 0 to 5, more preferably from 1 to 5.

As used herein, aryl means a monovalent radical containing one or more aromatic rings per radical, which, in the case wherein the radical contains two or more rings, may be fused rings and which may optionally be substituted on the one or more aromatic rings with one or more alkyl groups, each preferably (C₁-C₆)alkyl.

As used herein, arylene means a divalent radical containing one or more aromatic rings per radical, which may optionally be substituted on the one or more aromatic rings with one or more alkyl groups, each preferably (C₁-C₆)alkyl and which, in the case wherein the divalent radical contains two or more rings, the rings may be may be fused or may be joined by a non-aromatic linkages, such as for example, an alkylene, alkylidene, any of which may be substituted at one or more sites on the aromatic ring with a halo group or (C₁-C₆)alkyl group.

In a highly preferred embodiment, R₁, R₂, R₃ and R₄ are each phenyl, a, b, c and d are each 1 and X is phenylene, more preferably 1,3-phenylene.

In an alternative highly preferred embodiment, embodiment, R₁, R_{2,} R₃ and R₄ are each phenyl, a, b, c and d are each 1 and X is a divalent radical according to the structural formula (VII):

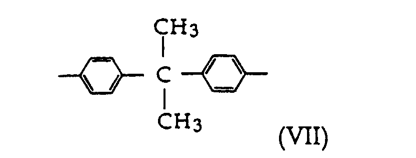

In a preferred embodiment the organophosphorus flame retardant comprises a blend of two or more organophosphorus oligomers, each according to formula (VI), wherein n is, independently for each oligomer, an integer from 1 to 5 and wherein the blend of oligomers has an average n of from greater than 1 to less than 5, more preferably greater than 1 to less than 3, even more preferably greater than 1 to less than 2, still more preferably from 1.2 to 1.7.

The thermoplastic resin composition of the present invention may optionally also contain various conventional additives, such as antioxidants, such as, e.g., organophosphites, e.g., tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, e.g., butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, e.g., distearylthiopropionate,
dilaurylthiopropionate, ditridecylthiodipropionate, amides of beta-(3,5-di-tert-butyl-4-hydroxyphenol)-propionic acid; UV absorbers and light stabilizers such as, e.g., (i) 2-(2'-hydroxyphenyl)-benzotriazoles, 2-Hydroxybenzophenones; (ii) esters of substituted and unsubstituted benzoic acids, (iii) acrylates, (iv) nickel compounds; sterically hindered amines such as, e.g., triisopropanol amine or the reaction product of 2,4-dichloro-6-(4-morpholinyl)-1, 3, 5-triazine with a polymer of 1, 6-diamine, N, N'-Bis(-2, 2, 4, 6-tetramethyl4-piperidenyl) hexane; neutralizers such as magnesium stearate, magnesium oxide, zinc oxide, zinc stearate, hydrotalcite; impact modifiers; fillers and reinforcing agents, such as, e.g., silicates, TiO₂, glass fibers, carbon black, graphite, calcium carbonate, talc, mica; and other additives such as, e.g., lubricants such as, e.g., pentaerythritol tetrastearate, EBS wax, silicone fluids, plasticizers, optical brighteners, pigments, dyes, colorants, flameproofing agents; anti-static agents; and blowing agents, as well as other flame retardants in addition to the above-disclosed organophosphorus flame retardant and fluoropolymer.

The thermoplastic resin composition of the present invention is made by combining and mixing the components of the composition of the present invention under conditions suitable for the formation of a blend of the components, such as for example, by melt mixing using, for example, a two-roll mill, a Banbury mixer or a single screw or twin-screw extruder, and, optionally, then reducing the composition so formed to particulate form, e.g., by pelletizing or grinding the composition.

The thermoplastic resin composition of the present invention can be molded into useful shaped articles by a variety of means such as injection molding, extrusion, rotational molding, blow molding and thermoforming to form articles such as, for example, computer and business machine housings, home appliances.

### Examples 1-5 and Comparative Examples C1-C4

The thermoplastic resin compositions of Examples 1-5 of the present invention and of Comparative Examples C1-C4 were each made by combining the components described below in the relative amounts (each expressed in parts by weight) set forth in TABLES I and V. The relative amount of butadiene contained in each of the compositions of Examples 1-3 and Comparative Examples C1-C3, expressed as a weight percent, is also noted in TABLE I. The components used in the thermoplastic resin compositions were as follows:

| | |
|---|---|
| PC | Linear polycarbonate resin derived from bisphenol A, phosgene and having an intrinsic viscosity of about 53 milliliters per gram in methylene chloride at 25°C. |
| ABS-1 | Emulsion polymerized acrylonitrile-butadiene-styrene graft copolymer comprising 50 wt% of a discontinuous polybutadiene rubber phase and 50 wt% of a rigid styrene-acrylonitrile thermoplastic phase (copolymer of 75 wt% styrene and 25 wt% acrylonitrile); |
| ABS-2 | Mass polymerized acrylonitrile-butadiene-styrene graft copolymer (SANTAC AT-05, Mitsui Chemical Industries, Ltd.); |
| ABS-3 | Mass polymerized acrylonitrile-butadiene-styrene graft copolymer comprising 11 wt% rubber (30 wt% styrene/70 wt% butadiene) having a particle size of about 0.45 µm and 89 wt% of a copolymer (81 wt% styrene/19 wt% acrylonitrile). |
| SAN | Copolymer of 75 wt% styrene and 25 wt% acrylonitrile. |
| TSAN | Additive made by copolymerizing styrene and acrylonitrile in the presence of an aqueous dispersion of PTFE (50 pbw PTFE, 50 pbw of a styrene-acrylonitrile copolymer containing 75 wt% styrene and 25 wt% acrylonitrile); and |
| RDP | Resorcinol diphosphate (Fyroflex™ RDP, Akzo Chemicals). |

**TABLE I**

| | C1 | C2 | C3 | 1 | 2 | 3 |
|---|---|---|---|---|---|---|
| PC | 71.27 | 64.27 | 59.27 | 71.27 | 64.27 | 59.27 |
| ABS-1 | 4.6 | 6.4 | 7.68 | -- | -- | -- |
| ABS-2 | -- | -- | -- | 18 | 25 | 30 |
| SAN | 13.4 | 18.6 | 22.32 | -- | -- | -- |
| RDP | 10 | 10 | 10 | 10 | 10 | 10 |
| TSAN | 0.5 | 0.5 | 0.5 | 0.5 | 0.5 | 0.5 |
| Additives | 0.23 | 0.23 | 0.23 | 0.23 | 0.23 | 0.23 |
| | | | | | | |
| Butadiene content (wt%) | 2.3 | 3.2 | 3.84 | 2.3 | 3.2 | 3.84 |

As shown in TABLE I, each of the compositions of Comparative Examples C1-C3 is analogous to a respective one of the compositions of Examples 1-3, except that in the compositions of Comparative Examples C1-C3, an amount of emulsion polymerized ABS resin effective to provide an equivalent rubber content was substituted for the mass polymerized ABS resin used in the analogous one of the composition of Examples 1-3.

In a series of runs, the components were blended in a twin screw extruder using a temperature profile of from 230 to 260°C to form the respective compositions of Examples 1-3 and Comparative Examples C1-C3. The compositions were then extruded into strands, chopped into pellets and then injection molded to form test specimens for physical property testing.

The physical properties of the compositions of Examples 1-3 and Comparative Examples C1-C3 were measured as follows. Melt flow index ("MFI") was measured at 500°F using a 2.16 kilogram weight. Melt viscosity ("MV") was measured at 500°F and at shear rates of 100 s⁻¹ and 500 s⁻¹, using a capillary rheometer (Kayeness, Model 8052). Notched Izod impact strength was measured according to ASTM D256. Dart impact strength was measured according to ASTM D3763 (using 4 inch diameter by 0.125 inch disks). Tensile strength and elongation were measured according to ASTM D638 at a cross head speed of 2.0 inches per minute. Flexural strength and modulus were measured according to ASTM D790. Heat distortion temperature was measured at 264 pounds per square inch on unannealed 0.125 inch thick test specimens according to ASTM D648. The flame retardant properties of the compositions were measured according to UL94 V-0.

Results of the testing are set forth below for Examples 1-3 and Comparative Example C1-C3 in TABLE II as follows: MFI, expressed in grams per 10 minutes ("g/10 min."), MV at 500°F and 100 s⁻¹ and 500 s⁻¹, expressed in Poise, notched Izod impact strength at 23°C, expressed in foot-pounds per inch ("ft-lb/in"), dart impact at -23°C , 0°C and -20°C, expressed in foot-pounds ("ft-lb"), and noting the percentage of specimens that exhibited a ductile fracture (" % ductile"), tensile strength at yield, flexural strength and flexural modulus, each expressed in kilopounds per square inch ("kpsi"), elongation at break, expressed as a percentage of original sample length (" %"), heat distortion temperature, expressed in degrees Fahrenheit ("HDT, °F"), and UL94-V-0 rating (V-0 or V-1) for each of two groups of specimen of each composition and average burn time, expressed in minutes (min.) for both groups of specimens combined.

**TABLE II**

| | C1 | C2 | C3 | 1 | 2 | 3 |
|---|---|---|---|---|---|---|
| MFI at 500°F (g/10 min.) | 17.3 | 19.3 | 20.8 | 16.9 | 18.5 | 20.4 |
| MV at 500°F (Poise) | | | | | | |
| 100 s⁻¹ | 8140 | 6597 | 5944 | 8073 | 7166 | 6493 |
| 500 s⁻¹ | 4270 | 3566 | 3237 | 4129 | 3611 | 3275 |
| Notched Izod Impact (ft-lb/ in) | | | | | | |
| 23°C | 1.8 | 2.5 | 2.3 | 11.9 | 13.4 | 15.6 |
| 0°C | 1.6 | 1.7 | 1.8 | 3.3 | 7.3 | 4.9 |
| -20°C | 1.6 | 1.6 | 1.1 | 2.0 | 2.1 | 2.5 |
| Dart Impact (ft-lb/ %ductile) | | | | | | |
| 23°C | 49.2/ 100 | 50.4/ 100 | 45.6/ 100 | 46/ 100 | 42.5/ 100 | 41.2/100 |
| 0°C | 51.1/100 | 48.9/100 | 46.7/100 | 45.6/100 | 46.3/ 100 | 44.4/ 100 |
| -20°C | 54.3/100 | 51.2/100 | 50.1/60 | 50.8/80 | 50.7/100 | 48.2/ 100 |
| Tensile Strength at yield (kpsi) | 10.5 | 10.3 | 10.1 | 9.7 | 9.4 | 9.1 |
| Tensile Elongation at yield (%) | 12 | 12 | 11 | 11 | 11 | 11 |
| Flexural Strength (kpsi) | 16.2 | 15.9 | 15.8 | 15.0 | 14.6 | 14.4 |
| Flexural modulus (kpsi) | 400.0 | 400.0 | 390.0 | 380.0 | 370.0 | 340.0 |
| HDT (°F) UL94 V-0 | 185 | 180 | 178 | 180 | 179 | 177 |
| Set 1 (5 specimens) | V-1 | V-1 | V-1 | V-1 | V-1 | V-1 |
| Set 2 (5 specimens) | V-0 | V-1 | V-1 | V-0 | V-1 | V-1 |
| Ave. total burn, Sets 1 and 2 (min.) | 2.9 | 20.9 | 37.1 | 8.4 | 32.5 | 36.4 |

Each of the compositions of Examples 1-3 each exhibited improved notched Izod impact performance while exhibiting a similar melt viscosity and melt flow index, compared to the respective analogous composition of Comparative Examples C1-C3. Generally, the differences in notched impact performance are indicative of different fracture modes, that is notched Izod impact values of greater than about 8 ft-lb/in are indicative of a ductile fracture mode, notched Izod impact values of greater than about 8 ft-lb/in are indicative of a brittle fracture mode and notched Izod impact values of from about 5 to about 8 ft-lb/in are indicative a transitional fracture mode, wherein some samples exhibit brittle fracture and some samples exhibit ductile fracture. The notched Izod values at 23°C therefore suggest that the compositions of Examples 1-3 experience a different fracture mode, that is, ductile fracture, than the compositions of Comparative Examples C1-C3, which appear to undergo brittle fracture.

Samples of the compositions of Examples 1-3 and Comparative Examples C1-C3 were aged at 63°C and 100% relative humidity ("RH"). The MV at 500°F and 100 s⁻¹ and 500 s⁻¹ and the notched Izod impact properties at 23°C were measured for specimens of each of the aged compositions,
according to the method disclosed above. Results are set forth in TABLE III as MV, expressed in Poise, and Notched Izod impact value, expressed in ft-lb/in, each at aging residence times of 3, 6 and 9 days. The relative change in MV value at t = 9, expressed as a percent of the MV value measured at t = 0 ("AMV (%)"), is also set forth in TABLE III for each of the compositions.

**TABLE III**

| | C1 | C2 | C3 | 1 | 2 | 3 |
|---|---|---|---|---|---|---|
| MV at 500°F after aging at 63°C and 100% RH for residence time "t" (Poise) | | | | | | |
| t = 0 | | | | | | |
| 100 s⁻¹ | 8140 | 6597 | 5944 | 8073 | 7166 | 6493 |
| 500 s⁻¹ | 4270 | 3566 | 3237 | 4129 | 3611 | 3275 |
| t = 3 days | | | | | | |
| 100 s⁻¹ | 3759 | 3241 | 3014 | 4557 | 3925 | 3562 |
| 500 s⁻¹ | 2311 | 1980 | 1822 | 2543 | 2163 | 1955 |
| t = 6 days | | | | | | |
| 100 s⁻¹ | 3687 | 3014 | 2848 | 3987 | 3790 | 3490 |
| 500 s⁻¹ | 2290 | 1864 | 1735 | 2398 | 2132 | 1941 |
| t = 9 days | | | | | | |
| 100 s⁻¹ | 3417 | 2900 | 2703 | 4091 | 3407 | 3490 |
| ΔMV (%) | 138 | 127 | 120 | 97 | 110 | 86 |
| 500 s⁻¹ | 2159 | 1814 | 1656 | 2381 | 1972 | 1972 |
| ΔMV (%) | 98 | 97 | 95 | 73 | 83 | 66 |
| Notched Izod Impact at 23°C after aging at 63°C and 100% RH for residence time "t" (ft-lb/in) | | | | | | |
| t = 3 days | 1.5 | 1.7 | 1.7 | 8.6 | 9.9 | 10.7 |
| t = 6 days | 1.5 | 1.6 | 1.6 | 7.6 | 9.7 | 10.5 |
| t = 9 days | 1.4 | 1.6 | 1.6 | 7.8 | 9.7 | 10.3 |

Each of the compositions of Examples 1-3 exhibited improved notched Izod impact performance, compared to the respective analogous composition of Comparative Examples C1-C3. Each of the compositions of Examples 1-3 was more resistant to hydrolysis under conditions of elevated temperature and humidity than the respective analogous composition of Comparative Examples C1-C3, as shown by the more pronounced drop in melt viscosity exhibited by the compositions of the Comparative Examples with increasing residence time under the aging conditions. The decrease in MV value exhibited by the Comparative Examples is thought to be the result of a drop in the molecular weight of the aromatic polycarbonate resin due to hydrolysis of the resin under the aging conditions.

The compositions of Examples 1-3 and Comparative Examples C1-C3 were subjected "normal" molding conditions wherein the compositions were subjected to a processing temperature of 475°F for a cycle time of 32 seconds and to "abusive" molding conditions wherein the compositions were subjected to a processing temperature of 530°F for a cycle time of 120 seconds. The MFI and Notched Izod impact properties at 23°C and 0°C were measured by the methods disclosed above for each of the compositions following the abusive molding. Results are set forth below in TABLE IV as MFI and Notched Izod impact values, expressed in ft-lb/in. The relative change in MFI after abusive molding, expressed as a percentage of the MFI value measured after normal molding conditions ("AMFI (%)"), is also set forth in TABLE IV for each of the compositions.

**TABLE IV**

| | C1 | C2 | C3 | 1 | 2 | 3 |
|---|---|---|---|---|---|---|
| MFI at 500°F (g/10 min.) | | | | | | |
| "Normal" molding conditions (475°F, 32 s) | 14.1 | 15.7 | 9.1 | 12.7 | 13.8 | 12.5 |
| "Abusive" molding conditions (530°F, 120 s) | 20.1 | 21.7 | 23 | 17.7 | 19.6 | 25.4 |
| ΔMFI (%) | 42.6 | 38.2 | 152.7 | 39.4 | 42.0 | 103.2 |
| Notched Izod Impact (ft-lb/in), "Abusive" molding conditions | | | | | | |
| (530°F, 120 s) | | | | | | |
| 23°C | 1.8/ | 2.0/ | 1.8/ | 7.0/ | 9.0/ | 9.7/ |
| 0°C | 1.4 | 1.5 | 1.1 | 2.4 | 2.3 | 1.9 |

Each of the compositions of Examples 1-3 exhibited improved notched Izod impact performance, compared to the respective analogous composition of Comparative Examples C1-C3. The composition of the present invention also provided improved stability, with the magnitude of the improvement increasing with increasing rubber content, as indicated by comparison of the MFI results in TABLE IV. The increases in MFI are thought to be the result of a decrease in the molecular weight of the aromatic polycarbonate resin due to thermal degradation of the resin under the abusive molding conditions. While the increases in MFI for Comparative Examples C1 and C2 do not appear to differ markedly from those of Examples 1 and 2, the increase in MFI following abusive molding exhibited by the composition of Comparative Example C3 was much more pronounced than that exhibited by Example 3.

Test specimens of the compositions of Examples 4 and 5 and Comparative Example C4 were molded under "normal" molding conditions wherein the compositions were exposed to a temperature of 475°F for a cycle time of 120 seconds and under "abusive" molding conditions wherein the compositions were exposed to a temperature of 530°F for a cycle time of 120 seconds.

Specimens of the compositions of Examples 4 and 5 and Comparative Example C4 were subjected to notched Izod impact testing at 23°C. Results are set forth below in TABLE V as Notched Izod impact values, expressed in ft-lb/ in.

Specimens of the compositions of Examples 4 and 5 and Comparative Example C4 were subjected to aging at 63°C and 100% RH. The dart impact performance at 23°C and tensile properties of the aged samples were each measured according to the testing methods disclosed above. Results are set forth in TABLE V as the percentage of specimens that exhibited a ductile fracture in the dart impact testing, expressed as % ductile fracture, and elongation at break, expressed as the percent retention of the elongation at break exhibited by the composition at t = 0, at aging residence times of 1 week and 6 weeks.

**TABLE V**

| | C4 | 4 | 5 |
|---|---|---|---|
| PC | 73.43 | 64.77 | 64.77 |
| ABS-1 | 6.5 | -- | -- |
| ABS-2 | -- | 25 | -- |
| ABS-3 | -- | -- | 25 |
| SAN | 8.84 | -- | -- |
| RDP | 9.5 | 9.5 | 9.5 |
| TSAN | 0.5 | 0.5 | 0.5 |
| Additives | 1.23 | 0.23 | 0.23 |
| Notched Izod Impact at 23°C (ft-lb/ in) | | | |
| "Normal" molding conditions (475°F, 120 s) | 11.3 | 13.5 | 13.6 |
| "Abusive" molding conditions (530°F, 120 s) | 2.5 | 10.5 | 11.4 |
| Dart Impact at 23°C after aging at 63°C and 100% RH for residence time "t" (% ductile fracture) | 100 | 100 | 100 |
| t = 0 | | | |
| t = 1 week | 100 | 100 | 100 |
| t = 6 weeks | 60 | 100 | 100 |
| Elongation at break after aging at 63°C and 100% RH for residence time "t" (% retention) | | | |
| t = 1 week | 39 | 49 | 45 |
| t = 6 weeks | 8 | 23 | 30 |

As shown by the results in TABLE V, the compositions of Examples 4 and 5 each exhibited improved notched Izod impact performance after molding under the "abusive" molding conditions, compared to that of the composition of Comparative Example C4. The notched Izod impact performance of composition of Comparative Example C4 molded under "abusive" was dramatically lower than the performance of the same composition molded under "normal" conditions, while the compositions of Examples 4 and 5 were less sensitive to the "abusive" molding conditions.

The compositions of Examples 4 and 5 each exhibited improved dart impact performance after aging under conditions of elevated heat and humidity conditions, compared to that of the composition of Comparative Example C4. The relative amount of test specimens of the composition of Comparative Example C4 that exhibited a ductile fracture mode was dramatically reduced after 6 weeks of aging, while all the specimens of the compositions of Examples 4 and 5 exhibited a ductile fracture mode after 6 weeks of aging.

The compositions of Examples 4 and 5 each exhibited improved retention of elongation performance after aging under conditions of elevated heat and humidity conditions, compared to that of the composition of Comparative Example C4. The elongation at break exhibited by test specimens of the composition of Comparative Example C4 was dramatically reduced after 6 weeks of aging, compared to that exhibited by specimens of the compositions of Examples 4 and 5.

The composition of the present invention provides good processability, good physical properties, including resistance to elevated temperature and impact resistance, and provides improved hydrolytic stability and improved resistance to thermal degradation.

## Claims

1. A thermoplastic resin composition, comprising:
(a) a polycarbonate resin,
(b) a rubber modified graft copolymer comprising a discontinuous rubber phase dispersed in a continuous rigid thermoplastic phase, wherein at least a portion of the rigid thermoplastic phase is chemically grafted to the rubber phase, said rubber modified graft copolymer being made by a bulk polymerization process, and
(c) a flame retarding amount of an organophosphorus flame retardant.

2. The composition of claim 1, wherein the composition comprises, based on 100 parts by weight the thermoplastic resin composition, from 40 to 95 parts by weight of the aromatic polycarbonate resin, from 4 to 59 parts by weight of the rubber modified graft copolymer and from 1 to 20 parts by of the organophosphate flame retardant.

3. The composition of claim 1, wherein the polycarbonate resin is derived from bisphenol A and phosgene.

4. The composition of claim 1, wherein the rubber phase comprises a polybutadiene polymer or a poly(styrene-butadiene) copolymer and the rigid thermoplastic phase comprises structural units derived from one or more monomers selected from vinyl aromatic monomers and a monoethylenically unsaturated nitrile monomers.

5. The composition of claim 4, wherein rigid phase comprises a copolymer of derived from monomers selected from the group consisting of styrene, α-methyl styrene and acrylonitrile.

6. The composition of claim 1, wherein the organophosphorus flame retardant comprises one or more compounds according to the structural formula (VI): 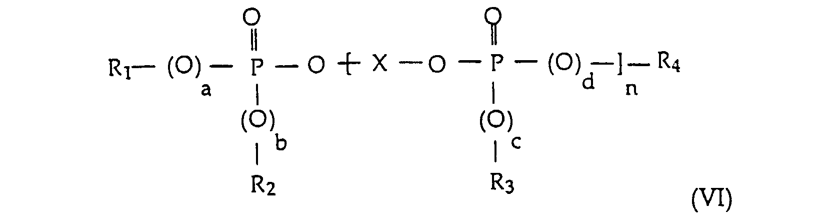
wherein R₁, R₂, R₃ and R₄ are each independently aryl, which may be optionally substituted with halo or alkyl,
X is arylene, optionally substituted with halo or alkyl,
a, b, c and d are each independently 0 or 1, and
n is an integer from 0 to 5.

7. The composition of claim 6, wherein, R₁, R₂, R₃ and R₄ are each phenyl, a, b, c and d are each 1 and X is phenylene or a divalent radical according the formula:

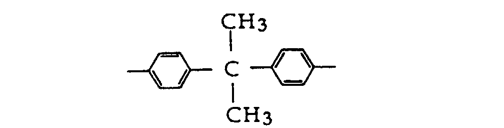

8. The composition of claim 1, wherein the composition further comprises a fluoropolymer, in an amount effective to provide anti-drip properties to the composition

9. The composition of claim 8, wherein the fluoropolymer is a tetrafluoroethylene polymer.

10. The composition of claim 1, wherein the fluoropolymer is added to the composition in the form of an additive made by emulsion polymerization of one or more monoethylenically unsaturated monomers in the presence of an aqueous dispersion of the fluoropolymer.

11. The composition of claim 10, wherein the additive is made by emulsion polymerization of styrene and acrylonitrile in the presence of an aquenous dispersion of polytetrafluoroethylene particles.
